# EUROPÄISCHE PATENTSCHRIFT

(11) **EP 1 089 671 B1**
(45) Veröffentlichungstag und Bekanntmachung des Hinweises auf die Patenterteilung: **03.12.2003**
(21) Anmeldenummer: 99936459.9
(22) Anmeldetag: 22.06.1999
(51) Int. Cl.: A61C 8/00

(54) **ÜBERTRAGUNGSELEMENT**
TRANSMISSION ELEMENT
ELEMENT DE TRANSMISSION

(30) Priorität: 26.06.1998 DE 19828479
(43) Veröffentlichungstag der Anmeldung: 11.04.2001
(73) Patentinhaber: FRIADENT GmbH, 68229 Mannheim (DE)
(72) Erfinder: WEBER, Heiner, D-72076 Tübingen (DE)
(74) Vertreter: Schmitt, Meinrad, Dipl.-Ing.
(86) Internationale Anmeldenummer: EP9904329
(87) Internationale Veröffentlichungsnummer: WO00000102

(56) Entgegenhaltungen:
- EP-A- 0 727 193
- WO-A-93/20774
- US-A- 4 758 161

## Beschreibung

Die Erfindung bezieht sich auf ein Übertragungselement der Dentaltechnik gemäß den im Oberbegriff des Patentanspruchs 1 angegebenen Merkmalen.

Aus der EP-A-0 727 193 ist ein derartiges Übertragungselement bekannt, dessen Führungshülse mittels eines Kernes mit dem in den Kieferknochen bereits implantierten Implantatkörper verbindbar ist. Der Implantatkörper enthält im Bereich seines koronalen Endes eine Ausnehmung mit nach Art eines Hexagons angeordneten achsparallelen Führungsflächen zwecks Drehsicherung eines mit dem Implantatkörper verbindbaren Aufbauelements, auf welchem eine Suprastruktur, eine Krone oder dergleichen festgelegt werden können. Bei der Herstellung von implantatgetmgenen Suprastrukturen, Kronenaufbauten oder dergleichen unter Verwendung eines Meistermodells ist eine exakte Übertragung der axialen ebenso wie der zirkulären Implantat-Positionen von besonderer Bedeutung. Entsprechend den hexagonalen Führungsflächen weist daher der Kern gleichfalls hexagonal angeordnete Positionierungselemente auf, welche als achsparallele Außenflächen an dem in den Implantatkörper eingreifenden Ende des Kernes ausgebildet sind. Im übrigen ist der Kern im wesentlichen innerhalb der Führungshülse angeordnet, welche an ihrem dem koronalen Ende des Implantatkörpers zugewandten Bereich mit den Positionierungsetementen des Kernes korrespondierende weitere Positionierungselemente aufweist. Diese weiteren Positionierungselemente sind als hexagonal angeordnete Innenflächen ausgebildet. Die Fertigung der als Innenflächen ausgebildeten weiteren Positionierungsetemente der Führungshülse erfordern einen erheblichen Aufwand. Es müssen sehr enge Toleranzen eingehalten werden, damit die Drehwinkellage des Implantatkörpers mittels der Führungshülse und der Abdruckmasse in ein Meistermodell übertragen werden können. Bereits geringfügige im üblichen Toleranzbereich liegende Differenzen bzw. Spalte zwischen der hexagonalen Innenfläche der Führungshülse und der hexagonalen Außenfläche des Kernes führen zu einer erheblichen Abweichung der Drehposition der Führungshülse. Auch bei hochpräziser Fertigung der innenliegenden, hexagonalen Flächen der Positionierungselemente der Führungshülse sind Übertragungsfehler der Drehwinkelposition in der Praxis kaum zu vermeiden.

Ferner ist aus der WO-A-93/20774 ein derartiges Übertragungselement bekannt, dessen Kern gleichfalls Positionierungselemente in Form von hexagonalen Flächen aufweist, welche mit einem Hexagon des Implantatkörpers in Eingriff bringbar sind. Der innerhalb der Führungshülse axial verschiebbar angeordnete Kern enthält eine achsparallele Abflachung, welche an einer achsparallelen abgeflachten Innenfläche der Führungshülse anliegt. Im übrigen sind die Außenfläche des Kerns und die daran anliegende Innenfläche der Führungshülse zylindrisch ausgebildet. Auch bei dieser Ausgestaltung erfordert die Fertigung der genannten abgeflachten Innenfläche der Führungshülse einen erheblichen Aufwand und schon geringfügige Abweichungen aufgrund von Fertigungstoleranzen führen zu einem beträchtlichen Winkelfehler bei der Übertragung der Winkelposition.

Ferner ist aus der US-A-4 758 161 ein Einsatzelement bekannt, welches mit dem Implantatkörper verbindbar ist. Das Einsatzelement enthält einen Schaft, welcher in eine axiale Ausnehmung des Implantatkörpers einsetzbar und dort insbesondere mittels Dentalzement verankerbar ist. Das Einsatzelement enthält ferner einen zur Befestigung eines Krone oder Suprastruktur ausgebildeten Kopf, welcher radiale Rillen, eine Einschnürung und eine Abflachung zur definierten Festlegung der Krone oder Suprastruktur aufweist.

Hiervon ausgehend liegt der Erfindung die Aufgabe zugrunde, bei einfacher Abdrucknahme gleichwohl eine hohe Präzision bei der Übertragung der Winkelposition zu erhalten. Auch soll die Handhabung in der zahnärztlichen Praxis und im Labor verbessert werden.

Die Lösung dieser Aufgabe erfolgt gemäß den im Patentanspruch 1 angegebenen Merkmalen.

Das erfindungsgemäße Übertragungselement zeichnet sich durch eine funktionsgerechte Konstruktion aus, dient als Repositionshilfe und gewährleistet mit hoher Präzision die Abformung und Übertragung der Implantatposition in axialer, radialer Richtung sowie in Umfangsrichtung. Das Übertragungselement ist zweiteilig ausgebildet und enthält zum einen einen Kern und zum anderen eine Führungshülse, welche miteinander korrespondierende Positionierungselemente zur gegenseitigen formschlüssigen definierten Festlegung in Umfangsrichtung ebenso wie in axialer Richtung aufweisen. Der Kern ist innen hohl zum Durchführen einer Halteschraube ausgebildet und er ist in die Hülse axial einsetzbar, wobei mittels der genannten Positionierungselemente, welche in zweckmäßiger Weise als radialer Ansatz bzw. eine radiale Ausnehmung ausgebildet sind, problemlos die gegenseitige Ausrichtung exakt gewährleistet ist. Der Kern besitzt eine einfache Kontur und/oder Geometrie und erfordert einen geringen Fertigungsaufwand. Der Kern ist teilweise zylindrisch ausgebildet und in die Hülse einschiebbar, und zur Abdrucknahme, insbesondere mit offenem Löffel, ist der Kern gemeinsam mit der Hülse mittels der genannten Halteschraube auf dem in den Kiefer implantierten Implantatkörper fixierbar. Bei Abdrucknahme mit dem offenen Löffel, welcher in der Implantatregion perforiert ist, ist der Kopf einer entsprechend langen Halteschraube durch die Perforation geführt. Nach dem Herausnehmen des Löffels bleibt das Übertragungselement im Abdruck und muß nicht reponiert werden. Der Kern weist zweckmäßig an seinem einen Ende das erste Positionierungselement auf, und am diametralen Ende das Rotationssicherungselement, insbesondere in Form eines Hexagons, weiches mit einem korrespondierenden Rotationssicherungselement des Implantatkörpers in Eingriff bringbar ist.

Die Übertragung der zirkulären und axialen Imptantatposition mittels des Übertragungselements in das Meistermodell wird somit gewährleistet und insgesamt wird eine erheblich verbesserte Paßgenauigkeit der Suprakonstruktion erreicht. Die erfindungsgemäße Hülse erstreckt sich bis in den Gingivabereich und die axiale Endfläche gelangt an der axialen Stirnfläche des Implantatkörpers direkt zur Anlage, wobei die genannte Endfläche und Stirnfläche im wesentlichen den gleichen Außendurchmesser aufweisen. Die axiale Länge der Führungshülse beträgt wenigstens 50 % der axialen Kernlänge und ist insbesondere wenigstens 65 % groß. Die Hülse weist auf ihrer Außenfläche wenigstens eine Einschnürung, eine Ausnehmung, Retention oder dergleichen auf, um so eine exakte Positionierung in der Abdruckmasse zu gewährleisten. Die Retentionen zur Sicherung der Drehposition und/oder der axialen Position in der Abdruckmasse können in zweckmäßiger Weise als an der Außenfläche angeordnete Abflachungen, die insbesondere durch Abfräsen hergestellt sind, oder als Längsnuten oder als Sackbohrungen oder dergleichen ausgebildet sein. Die Einschnürung oder Ausnehmung ist etwa in der Mitte der axialen Längserstreckung der Hülse in zweckmäßiger Weise vorgesehen, wobei der vom Implantatkörper abgewandte Teil eine im wesentlichen zylindrische oder aber eine näherungsweise konische Außenkontur aufweist, deren Spitze gleichfalls auf der dem Implantatkörper abgewandten Seite liegt. Der dem Implantatkörper zugewandte Teil der Hülse weist eine Außenkontur entsprechend der des Dental-Aufbauelements im Durchtrittsbereich der Gingiva und/oder des entsprechenden Gingivaformers auf.

Weiterbildungen und besondere Ausgestaltungen der Erfindung sind in den Unteransprüchen sowie der weiteren Beschreibung angegeben.

Die Erfindung wird nachfolgend anhand von besonderen Ausführungsbeispielen näher erläutert, ohne daß insoweit eine Beschränkung erfolgt. Es zeigen:
- Fig. 1: eine seitliche Ansicht des Übertragungselements in explosionsartiger Darstellung,
- Fig. 2: das Übertragungselement im zusammengefügten Zustand von Führungshülse und Kern,
- Fig. 3: einen axialen Längsschnitt durch eine weitere Ausführungsform zusammen mit dem Implantatkörper und der Halteschraube,
- Fig. 4: eine Ansicht der weiteren Ausführungsform gemäß Fig. 3 in einer bezüglich der Längsachse in einer um 90° gedrehten Position,
- Fig. 5: die Ausführungsform gemäß Fig. 3, wobei die Halteschraube und der Kern teilweise gelöst dargestellt sind,
- Fig. 6: eine perspektivische Darstellung entsprechend Fig. 5.

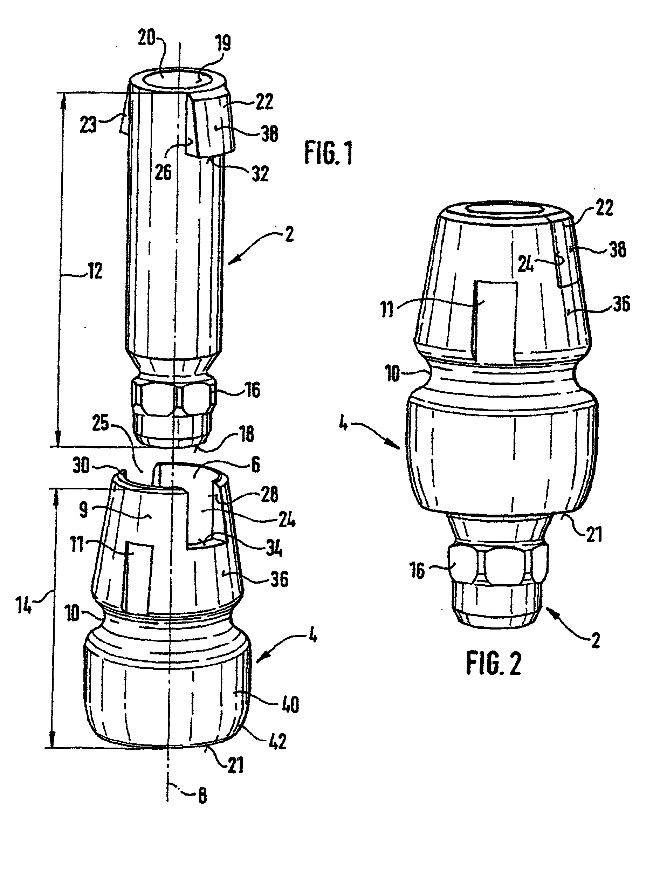

Die explosionsartige Darstellung gemäß Fig. 1 zeigt den Kern 2, welcher eine axiale Durchgangsbohrung 20 für eine Halteschraube enthält, sowie die Führungshülse bzw. Hülse 4 mit einer zentralen durchgehenden Öffnung 6. Der Außendurchmesser des Kerns 2 ist maximal so groß wie der Durchmesser der genannten Öffnung 6 der Hülse 4 und der Kern 2 kann somit in Richtung der Längsachse 8 in die Hülse eingeschoben werden bzw. die Hülse 4 über den Kern 2 im wesentlichen ohne radiales Spiel geschoben werden. In bevorzugter Weise sind der Außendurchmesser der Außenfläche des Kernes 2 und der Innendurchmesser der Innenfläche der Hülse 4 derart aufeinander abgestimmt, daß der Kern mit Schiebepassung in die Hülse 4 einsetzbar bzw. wieder herausnehmbar ist. Die Hülse 4 besitzt in der Außenfläche 9 eine radiale Einschnürung 10, welche eine sichere Fixierung in der Abdruckmasse definiert ermöglicht. Zusätzlich oder alternativ zu dieser radialen Einschnürung 10 kann im Rahmen der Erfindung die Hülse 4 ggf. auch andere Retentionen, Öffnungen oder dergleichen zur Positionierung und Fixierung in der Abdruckmasse aufweisen. In bevorzugter Weise sind im Bereich der Außenfläche die Hülse 4 Rotationssicherungen oder Retentionen für eine drehstabile Verankerung im Abformmaterial vorgesehen, wie insbesondere wenigstens eine Abflachung 11, Längsnut oder dergleichen. Mittels der erfindungsgemäßen Retention, welche in bezug auf die ansonsten im wesentlichen rotationssymmetrische Außenfläche der Hülse 4 eine radial nach innen gerichtete Vertiefung oder Ausnehmung bildet, wird eine axiale und radiale Fixierung der Position der Hülse in der Abdruckmasse sichergestellt und somit die präzise Übertragung der Rotationssicherung und zweckmäßig auch der axialen Position vom Implantatkörper auf die Hülse sowie die Abdruckmasse und letztendlich für das Aufbauteil, die Suprakonstruktion oder dergleichen gewährleistet.

Der Kern 2 besitzt eine Länge 12, welche größer ist als die Länge 14 der Hülse 4. Die Länge 14 ist in zweckmäßiger Weise wenigstens halb so groß wie die Länge 12 des Kernes 2, wobei die Vorgabe der Länge 14 der Hülse 4 mit wenigstens 70 % der Kernlänge 12 sich als zweckmäßig erwiesen hat. Der Kern 2 weist an seinem, hier nicht weiter dargestellten, dem Implantatkörper zugewandten Ende ein Element 16 zur Rotationssicherung bzw. zur Übertragung der zirkulären Implantatposition auf. Das Rotationssicherungselement 16 ist hier als ein Hexagon ausgebildet und in eine entsprechend ausgebildeten Ausnehmung des Implantatkörpers einsetzbar. Im zusammengebauten Zustand ragt das Ende des Kerns 2 mit dem Sicherungselement 16 aus der Hülse 4 heraus.

Anstelle des an der Außenfläche 2 vorgesehenen Elements 16 bzw. Hexagons können im Rahmen der Erfindung auch andere Elemente zur Rotationssicherung vorgesehen werden, beispielsweise im Bereich der Stirnfläche 18 oder in der Nähe derselben in der axial durchgehenden Innenfläche 19 des Kernes. An dieser Stelle sei angemerkt, daß der Kern 2 innen die axiale Durchgangsbohrung 20 zum Durchführen einer Halteschraube aufweist, mittels welcher der Kern 2 und die mit diesem kombinierte Hülse 4 zur Abnahme mit dem in den Kieferknochen implantierten Implantatkörper verbindbar ist. Die axiale Stirnfläche 21 der Hülse 4 dient zur direkten Anlage an der gegenüberliegenden Stirnfläche des Implantatkörpers, wodurch eine definierte axiale Ausrichtung gewährleistet ist.

Der Kern 2 besitzt wenigstens ein erstes Positionierungselement 22, welchem ein zweites Positionierungselement 24 der Hülse 4 zugeordnet ist. Die Positionierungselemente sind im Bereich der dem Implantatkörper abgewandten Enden von Kern 2 bzw. Hülse 4 vorgesehen. Wie ersichtlich, weist der Kern 2 bevorzugt zwei derartige, in radialer Richtung diamtetrale Positionierungselemente 22, 23 auf und entsprechend auch die Hülse 4 zwei diametrale Positionierungselemente 24, 25. Das oder die ersten Positionierungselemente 22, 23 des Kerns 2 sind in zweckmäßiger Weise als radiale Ansätze des Kerns 2 ausgebildet, während die zweiten Positionierungselemente 24 als in radialer Richtung nach außen gerichtete, vorzugsweise durchgehende Schlitze, ausgebildet sind, in welche die Positionierungselemente 22, 23 bzw. Ansätze des Kerns 2 paßgenau einfügbar sind. Die Positionierungselemente 22, 23 weisen in zweckmäßiger Weise achsparallele Seitenflächen 26 auf und die zweiten Positionierungselemente 24, 25 der Hülse 4 zugeordnete Seitenflächen 28. In bevorzugter Weise wird eine spielfreie Anlage der Seitenflächen 26 bzw. 28 von Kern 2 bzw. Hülse 4 vorgegeben, wodurch eine definierte Übertragung der zirkulären Implantatposition gewährleistet ist. Zum Einführen des ersten Positionierungselements 22, 23 des Kerns 2 ist das zweite Positionierungselement 24, 25 zur Endfläche 30 bzw. Hülsenende offen ausgebildet. Desweiteren besitzen der Kern 2 und die Hülse 4 einander zugeordnete und miteinander korrespondierende axiale Anlageflächen 32, 34, so daß auch eine definierte Übertragung der Axialposition sichergestellt ist.

Es versteht sich, daß im Rahmen der Erfindung auch andere Ausricht- oder Festlegungsmittel in axialer und radialer Richtung von Kern 2 und Hülse 4 vorgebbar sind. So kann beispielsweise das erste Positionierungselement des Kerns 2 als ein radialer Schlitz ausgebildet sein, in welchen als zweites Positonierungselement ein radial nach innen gerichteter Ansatz der Hülse 4 in entsprechender Weise eingreift. Desweiteren können Retentionen, wie Verzahnungen oder zahnähnliche Positionierungselemente vorgesehen sein, weiche eine formschlüssige Verbindung bzw. Positionierung von Kern und Hülse ermöglichen.

Die bereits erwähnte radiale Einschnürung 10 der Hülse 4 liegt etwa in der Mitte der Längserstreckung. Der dem Implantatkörper abgewandte, an die Einschnürung 10 anschließende Bereich der Hülse 4 besitzt eine, bevorzugt näherungsweise, konische Außenkontur 36, wobei die Konusspitze gleichfalls dem Implantatkörper abgewandt liegt. Die Außenfläche 38 der radialen Ansätze 22, 23 sind in bevorzugter Weise an die Außenkontur 36 der Hülse 4 angepaßt. Zur Implantatseite hin weist die Hülse 4 eine zunächst näherungsweise zylindrische Außenkontur 40 auf, welche über einen abgerundeten Übergangsbereich 42 mit einem vorgegebenen Radius an die axiale Endfläche 21 anschließt.

Fig. 2 zeigt das Übertragungselement mit dem Kern 2 und der Hülse 4 im zusammengebauten Zustand, wobei der über die axiale Endfläche 21 vorstehende Endbereich des Kerns 2 mit dem Element 16 zur Rotationssicherung gut zu erkennen ist. Die Außenfläche 38 des Positionierungselements 22 entspricht der Außenkontur 36 der Hülse 4. Desweiteren ist gut zu erkennen, daß die miteinander korrespondierenden Positionierungselemente 22, 25, nämlich der Ansatz bzw. die Ausnehmung, paßgenau aneinander liegen, so daß Relativbewegungen in Umfangsrichtung oder in axialer Richtung ausgeschlossen sind.

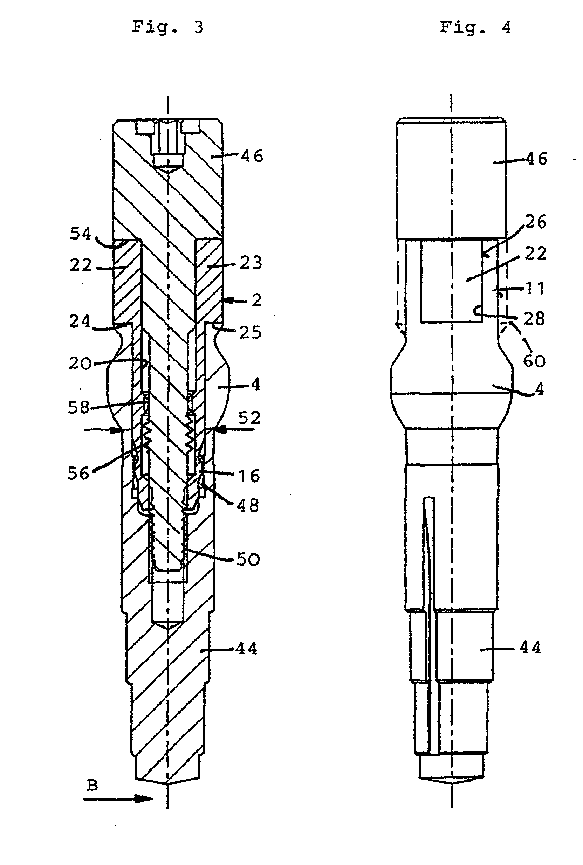

Fig. 3 zeigt in einem axialen Längsschnitt eine weitere Ausführungsform des zweiteiligen Übertragungselements mit dem Kern 2 und der Hülse 4 zusammen mit dem Implantatkörper 44 und der Halteschraube 46. Zur Rotationssicherung eines Aufbauteils oder einer Suprakonstruktion enthält der Implantatkörper 44 im Bereich seines koronalen Endes insbesondere innenliegende Sicherungsmittel 48, welche bevorzugt als Hexagon ausgebildet sind und mit welchen das Rotationssicherungselement 16 des Kernes 2 in Eingriff steht. Die Halteschraube 46 enthält an ihrem apikalen Ende ein Gewinde 50, welches in ein korrespondierendes Innengewinde des Implantatkörpers 44 eingeschraubt ist. Am koronalen Ende besitzt der Implantatkörper 44 einen Außen-durchmesser 52, mit welchem der Außendurchmesser der anliegenden axialen Endfläche 21 der Hülse 4 übereinstimmt. Die beiden Positionierungselemente 22, 23 des Kernes 2 durchdringen die korrespondierenden Elemente bzw. Ausnehmungen 24, 25 der Hülse 4, welche im übrigen bis an die Anlageschulter 54 der Halteschraube 46 reicht und mittels dieser bezüglich des Implantatkörpers 44 festgelegt ist.

Die Halteschraube 46 enthält erfindungsgemäß ein erstes Mitnahmeelement 56, welches insbesondere als Außengewinde ausgebildet ist. Die axiale Durchgangsbohrung 20 des Kernes 2 enthält ein korrespondierendes zweites Mitnahmeelement 58, welches in zweckmäßiger Weise als Innengewinde passend zum Außengewinde 56 der Halteschraube 46 ausgebildet ist. In der dargestellten Arretierungsposition des Kernes 2 und Führungshülse 4 bezüglich des Implantatkörpers 44 zur Abdrucknahme befindet sich das erste Mitnahmeelement 56 in zweckmäßiger Weise näher dem Implantatkörper 44 als das zweite Mitnahmeelement 58, wobei vorteilhaft kein Eingriff zwischen den beiden Mitnahmeelementen 56 und 58 vorgesehen ist. Wie nachfolgend noch zu erläutern ist, wird nach der Abdrucknahme beim Lösen der Halteschraube 46 aufgrund der beiden Mitnahmeelemente 56, 58 auch der Kern 2 problemlos axial vom Implantatkörper 44 getrennt.

Fig. 4 zeigt das Übertragungselement mit dem Kern 2 und der Führungshülse 4 ebenso wie den Implantatkörper 44 und die Halteschraube 46 in einer seitlichen Ansicht in Blickrichtung B gemäß Fig. 3. Die Hülse 4 besitzt zwei seitlich diametrale Abflachungen 11, welche in einfacher Weise insbesondere durch Abfräsen eines im übrigen im wesentlichen zylindrischen Teiles hergestellt ist, dessen Außenkontur mittels gestrichelten Linien 60 angedeutet ist. Ferner enthält die Hülse 4 Retentionen 62, in welche bei der Abdrucknahme die Abdruckmasse eindringt und welche somit gleichermaßen zur Rotations- als auch zur Axialsicherung der Hülse 4 in der Abdruckmasse und somit zur Übertragung der zirkulären und axialen Position des Implantatkörpers 44 dienen.

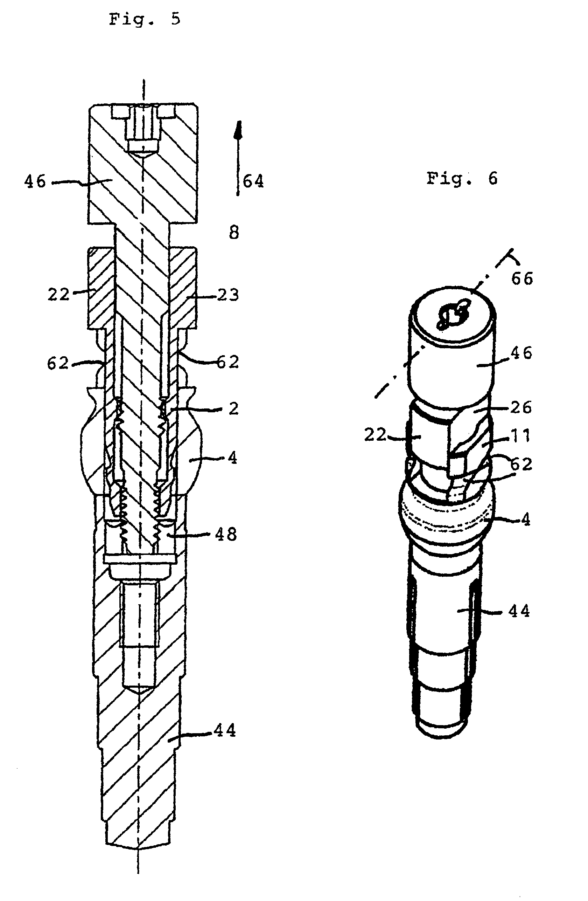

Fig. 5 zeigt einen axialen Längsschnitt in der gleichen Ebene wie Fig. 3, wobei nunmehr die Halteschraube 46 in Richtung des Pfeiles 64 aus dem Implantatkörper 44 teilweise herausgelöst ist. Wie ersichtlich, sind das erste Mitnahmeelement 56 der Halteschraube 46 und das zweite Mitnahmeelement 58 des Kernes 2 in Eingriff derart, daß beim Herausschrauben der Halteschraube 46 auch der Kern 2 aus der Hülse 4 teilweise bereits herausgelöst worden ist. Hierdurch ist die Handhabung nach der Abdrucknahme erheblich erleichtert, zumal der Kern 2 mit oder nach dem vollständigen Herauslösen der Halteschraube 46 gleichfalls in Richtung der Längsachse 8 bzw. des Pfeiles 64 ohne weiteres herausgelöst werden kann. Es sei an dieser Stelle festgehalten, daß die ersten Positionierungselemente 22, 23 des Kernes 2 und die zugeordneten Positionierungselemente 24, 25 der Hülse 4 derart aufeinander abgestimmt sind, daß zum einen die Rotationssicherung gewährleistet ist, zum anderen aber das axiale Herauslösen aufgrund der oben erläuterten einander zugeordneten achsparallelen Seitenflächen des Kernes 2 einerseits und der Führungshülse 4 andererseits ohne weiteres möglich ist. Die Retentionen 62 der Führungshülse 4 sind hier gleichfalls gut zu erkennen.

Fig. 6 zeigt in einer perspektivischen Ansicht den mittels der Halteschraube 46 teilweise herausgelösten Kern 2 entsprechend Fig. 5. Die Schnittebene gemäß Fig. 5 ist mittels der strichpunktierten Linie 66 angedeutet. Die im Bereich der seitlichen Abflachung 11 der Hülse 4 vorgesehenen Retentionen 62 sind hierbei klar zu erkennen.

### Bezugszeichen

- 2: Kern
- 4: Führungshülse
- 6: zentrale Öffnung in 4
- 8: Längsachse
- 9: Außenfläche von 4
- 10: radiale Einschnürung in 4
- 11: Abflachung
- 12: Länge von 2
- 14: Länge von 4
- 16: Rotationssicherungselement / Hexagon
- 18: Stirnfläche von 2
- 20: Durchgangsbohrung in 2
- 21: axiale Endfläche von 4
- 22, 23: erstes Positionsierungselement
- 24, 25: zweites Positionierungselement
- 26: Seitenfläche von 22
- 28: Seitenfläche von 24
- 30: Hülsenende / Endfläche
- 32: axiale Anlagefläche von 22
- 34: axiale Anlagefläche von 24
- 36: konische Außenkontur von 4
- 38: Außenfläche
- 40: zylindrische Außenkontur von 4
- 42: abgerundeter Bereich
- 44: Implantatkörper
- 46: Halteschraube
- 48: Hexagon
- 50: Gewinde von 46
- 52: Außendurchmesser von 44
- 54: Anlageschulter
- 56: erstes Mitnahmeelement von 46
- 58: zweites Mitnahmeelement von 2
- 60: Außenkontur / gestrichelte Linie
- 62: Retention
- 64: Pfeil
- 66: Schnittebene / strichpunktierte Linie

## Patentansprüche

1. Übertragungselement, welches in der Dentaltechnik zur Übertragung der Position eines implantierten Implantatkörpers (44) in ein Meistermodell vorgesehen ist, enthaltend eine in einer Abdruckmasse zur Übertragung der axialen und zirkulären Position des Implantatkörpers (44) festlegbare Führungshülse (4) sowie einen mit dem Implantatkörper (44) verbindbaren Kern (2), welcher zumindest teilweise in einer zentralen Öffnung (6) der Führungshülse (4) angeordnet ist, wobei der Kern (2) und die Führungshülse (4) miteinander korrespondierende Positionierungselemente (22, 23; 24, 25) aufweisen,
**dadurch gekennzeichnet, daß** das Positionierungselement der Führungshülse (4) als ein radial durchgehender Schlitz (24, 25) ausgebildet ist, welcher zu dem vom Implantatkörper (44) abgewandten Hülsenende (30) offen ausgebildet ist,
daß das Positionierungselement des Kernes (2) als ein radialer Ansatz (22, 23) ausgebildet ist, welcher in den genannten radialen Schlitz (24, 25) der Führungshülse (4) eingreift,
daß zur Übertragung der zirkulären Position der Schlitz (24, 25) zu einer Längsachse (8) der Führungshülse (4) parallele Seitenflächen (28) aufweist, an welchen zur Längsachse (8) gleichfalls parallele Seitenflächen (26) des Ansatzes (22, 23) zumindest näherungsweise spielfrei anliegen,
und daß zur Übertragung der Axialposition der Schlitz (24, 25) eine axiale Anlagefläche (34) und der radiale Ansatz (22, 23) eine korrespondierende axiale Anlagefläche (33) aufweisen.

2. Übertragungselement nach Anspruch 1, **dadurch gekennzeichnet, daß** die Führungshülse (4) diametral zu dem genannten Schlitz (24) einen zweiten Schlitz (25) enthält, wobei entsprechend der Kern (2) einen zweiten radialen Ansatz (23) aufweist.

3. Übertragungselement nach Anspruch 1 oder 2, **dadurch gekennzeichnet, daß** die Führungshülse (4) außen eine radiale Einschnürung (10) oder eine Abflachung (11) oder eine Retention (62) oder eine Ausnehmung zur axialen Fixierung und/oder Rotationssicherung in der Abdruckmasse aufweist.

4. Übertragungselement nach einem der Ansprüche 1 bis 3, **dadurch gekennzeichnet, daß** die Führungshülse (4) eine axiale Länge (14) aufweist, welche wenigstens 50%, vorzugsweise wenigstens 70%, der Länge (12) des Kerns (2) beträgt.

5. Übertragungselement nach Anspruch 3 oder 4, **dadurch gekennzeichnet, daß** die Einschnürung (10) der Führungshülse (4) näherungsweise in der Mitte der axialen Längserstreckung der Führungshülse (4) angeordnet ist und/oder daß die Retention (62), Abflachung (11) oder Ausnehmung, in einem vom Implantatkörper (44) abgewandten Teil der Führungshülse (4) angeordnet ist.

6. Übertragungselement nach einem der Ansprüche 1 bis 5, **dadurch gekennzeichnet, daß** der Kern (2) an seinem dem Implantatkörper (44) zugewandten Ende Elemente (16) zur Rotationssicherung und/oder an seinem dem Implantatkörper (44) abgewandten Ende den genannten Ansatz (22, 23) aufweist und/oder daß der Kern (2) im übrigen im wesentlichen zylindrisch ausgebildet ist, und/oder daß der Kern (2) eine Durchgangsbohrung (20) für eine mit dem Implantatkörper (44) verbindbare Halteschraube (46) aufweist.

7. Übertragungselement nach einem der Ansprüche 1 bis 6, **dadurch gekennzeichnet, daß** die Halteschraube (46) ein erstes Mitnahmeelement (56), bevorzugt in Form eines Außengewindes, aufweist und daß der Kern (2) ein korrespondierendes zweites Mitnahmeelement (58), bevorzugt in Form eines entsprechenden Innengewindes derart aufweist, daß beim Herauslösen der Halteschraube (46) auch der Kern (2) zumindest teilweise aus dem Implantatkörper (44) herauslösbar ist.

8. Übertragungselement nach einem der Ansprüche 1 bis 7, **dadurch gekennzeichnet, daß** die Führungshülse (4) eine dem Implantatkörper (44) und mit diesem zur Anlage bringbare Endfläche (21) aufweist und / oder daß die Endfläche (21) einen Außendurchmesser aufweist, welcher zumindest näherungsweise dem Außendurchmesser (52) des anliegenden Implantatkörpers (44) entspricht.

9. Übertragungselement nach einem der Ansprüche 1 bis 8, **dadurch gekennzeichnet, daß** die Führungshülse (4) einen dem Implantatkörper (44) zugewandten Teil enthält, dessen bevorzugt im wesentlichen zylindrische Außenkontur (40) über einen abgerundeten Bereich (42) an den Implantatkörper (44) anschließt, daß an den genannten Teil in Richtung weg vom Implantatkörper (44) die insbesondere ringförmige radiale Einschnürung (10) vorgesehen ist und daß an diese, weiter abgewandt vom Implantatkörper (44) ein weiterer Teil mit insbesondere konischer Außenkontur (6) oder einer im wesentlichen zylindrischen Außenkontur anschließt, wobei in diesem letztgenannten Teil die Abflachung (11), und / oder die Retention (62) und / oder die Schlitze (24, 25) vorgesehen sind.

## Claims

1. Transmission element provided in dental technology for transmitting the position of an implanted implant body (44) to a master model, containing a guide sleeve (4) which can be fixed in an impression compound to transmit the axial and circular position of the implant body (44) and a core (2) which can be connected to the implant body (44) and which is arranged at least partially in a central aperture (6) of the guide sleeve (4), wherein the core (2) and the guide sleeve (4) have mutually corresponding positioning elements (22, 23; 24, 25), **characterised in that** the positioning element of the guide sleeve (4) is constructed as a radially continuous slot (24, 25) configured so as to be open toward the sleeve end (30) remote from the implant body (44), **in that** the positioning element of the core (2) is constructed as a radial shoulder (22, 23) which engages in said radial slot (24, 25) of the guide sleeve (4), **in that** to transmit the circular position, the slot (24, 25) comprises side faces (28) parallel to a longitudinal axis (8) of the guide sleeve (4), to which faces side faces (26) of the shoulder (22, 23) likewise parallel to the longitudinal axis (8) are connected at least substantially without play, and **in that** to transmit the axial position, the slot (24, 25) comprises an axial contact face (34) and the radial shoulder (22, 23) comprises a corresponding axial contact face (33).

2. Transmission element according to claim 1, **characterised in that** the guide sleeve (4) comprises a second slot (25) diametrically to said slot (24), the core (2) accordingly comprising a second radial shoulder (23).

3. Transmission element according to claim 1 or 2, **characterised in that** on the outside the guide sleeve (4) has a radial constriction (10) or a flattened region (11) or a retention means (62) or a recess for axial fixing and/or rotational blocking in the impression compound.

4. Transmission element according to any of claims 1 to 3, **characterised in that** the guide sleeve (4) has an axial length (14) which is at least 50%, preferably at least 70% of the length (12) of the core (2).

5. Transmission element according to claim 3 or 4, **characterised in that** the constriction (10) of the guide sleeve (4) is arranged approximately in the centre of the axial longitudinal extension of the guide sleeve (4), and/or **in that** the retention means (62), flattened region (11) or recess is arranged in a portion of the guide sleeve (4) remote from the implant body (44).

6. Transmission element according to any of claims 1 to 5, **characterised in that** at its end facing the implant body (44), the core (2) comprises elements (16) for rotational blocking and/or at its end remote from the implant body (44) the said shoulder (22, 23), and/or **in that** the core (2) is, furthermore, constructed so as to be substantially cylindrical, and/or **in that** the core (2) has a through hole (20) for a securing screw (46) which can be connected to the implant body (44).

7. Transmission element according to any of claims 1 to 6, **characterised in that** the securing screw (46) comprises a first entraining element (56), preferably in the form of an external thread, and **in that** the core (2) comprises a corresponding second entraining element (58), preferably in the form of a corresponding internal thread such that when the securing screw (46) is removed the core (2) can also be at least partially removed from the implant body (44).

8. Transmission element according to any of claims 1 to 7, **characterised in that** the guide sleeve (4) comprises an end face (21) which can be brought to the implant body (44) and bought into contact therewith, and/or **in that** the end face (21) has an external diameter which at least approximately corresponds to the external diameter (52) of the adjoining implant body (44).

9. Transmission element according to any of claims 1 to 8, **characterised in that** the guide sleeve (4) contains a part facing the implant body (44) and of which the preferably substantially cylindrical outer contour (40) adjoins the implant body (44) via a rounded region (42), **in that** the, in particular, annular radial constriction (10) is provided on said part in the direction away from the implant body (44), and **in that** a further part with, in particular, a conical outer contour (6) or a substantially cylindrical outer contour adjoins the constriction (10) more remotely from the implant body (44), the flattened region (11) and/or the retention means (62) and/or the slots (24, 25) being provided in this further part.

## Revendications

1. Élément de transfert, qui est prévu en technique dentaire pour transmettre la position d'un corps d'implant (44) implanté vers un modèle maître, comprenant une douille de guidage (4) pouvant être immobilisée dans une masse d'empreinte afin de transmettre la position axiale et circulaire du corps d'implant (44), ainsi qu'une âme (2) pouvant être reliée au corps d'implant (44) qui est placée au moins partiellement dans une ouverture centrale (6) de la douille de guidage (4), l'âme (2) et la douille de guidage (4) présentant des éléments de positionnement (22, 23 ; 24, 254) se correspondant,
***caractérisé en ce que*** l'élément de positionnement de la douille de guidage (4) est conformé en fente (24, 25) continue radialement, qui est formée ouverte en direction de l'extrémité (30) de la douille opposée au corps d'implant (44),
***en ce que*** l'élément de positionnement de l'âme (2) est conformé en embase radiale (22, 23) qui s'engage dans ladite fente radiale (24, 25) de la douille de guidage (4),
**en ce que**, pour transmettre la position circulaire, la fente (24, 25) présente des surfaces latérales (28) parallèles à un axe longitudinal (8) de la douille de guidage (4) sur lesquelles s'appuient au moins approximativement sans jeu des surfaces latérales (26) de l'embase (22, 23) également parallèles à l'axe longitudinal (8),
et ***en ce que,*** pour transmettre la position axiale, la fente (24, 25) présente une surface d'appui axiale (34) et l'embase radiale (22, 23) présente une surface d'appui axiale (33) correspondante.

2. Élément de transfert selon la revendication 1, ***caractérisé en ce que*** la douille de guidage (4) contient une deuxième fente (25) diamétralement opposée à ladite fente (24), l'âme (2) présentant de façon correspondante une deuxième embase radiale (23).

3. Élément de transfert selon la revendication 1 ou 2, ***caractérisé en ce que*** la douille de guidage (4) présente à l'extérieur un étranglement radial (10) ou un méplat (11) ou une rétention (62) ou un évidement pour la fixation axiale et/ou l'immobilisation en rotation dans la masse de l'empreinte.

4. Élément de transfert selon l'une quelconque des revendications 1 à 3, ***caractérisé en ce que*** la douille de guidage (4) présente une longueur axiale (14) qui vaut au moins 50 %, de préférence au moins 70 %, de la longueur (12) de l'âme (2).

5. Élément de transfert selon la revendication 3 ou 4, ***caractérisé en ce que*** l'étranglement (10) de la douille de guidage (4) est placé approximativement au milieu de l'extension longitudinale axiale de la douille de guidage (4) et/ou ***en ce que*** la rétention (62), le méplat (11) ou l'évidement est placé dans une partie de la douille de guidage (4) opposée au corps d'implant (44).

6. Élément de transfert selon l'une quelconque des revendications 1 à 5, ***caractérisé en ce que*** l'âme (2) présente à son extrémité tournée vers le corps d'implant (44) des éléments (16) pour l'immobilisation en rotation et/ou à son extrémité opposée au corps d'implant (44) ladite embase (22, 23), et/ou ***en ce que*** l'âme (2) est conformée sinon essentiellement cylindrique, et/ou ***en ce que*** l'âme (2) présente un perçage continu (20) pour une vis de maintien (46) pouvant être reliée au corps d'implant (44).

7. Élément de transfert selon l'une quelconque des revendications 1 à 6, ***caractérisé en ce que*** la vis de maintien (46) présente un premier élément d'entraînement (56), de préférence de la forme d'un filetage extérieur, et ***en ce que*** l'âme (2) présente un deuxième élément d'entraînement (58), de préférence de la forme d'un filetage intérieur correspondant, de telle manière que lors de la libération de la vis de maintien (46), l'âme (2) peut également être extraite au moins partiellement du corps d'implant (44).

8. Élément de transfert selon l'une quelconque des revendications 1 à 7, ***caractérisé en ce que*** la douille de guidage (4) présente une surface d'extrémité (21) pouvant être placée en appui contre le corps d'implant (44) et/ou ***en ce que*** la surface d'extrémité (21) présente un diamètre qui correspond au moins approximativement au diamètre extérieure (52) du corps d'implant (44) adjacent.

9. Élément de transfert selon l'une quelconque des revendications 1 à 8, **caractérisé en ce que** la douille de guidage (4) comprend une partie tournée vers le corps d'implant (44) dont le contour extérieur (40) de préférence sensiblement cylindrique fait suite au corps d'implant (44) sur une zone arrondie (42), ***en ce que*** l'étranglement radial (10) en particulier annulaire est prévu sur ladite partie en s'écartant du corps d'implant (44), et ***en ce que*,** plus loin à l'opposé du corps d'implant (44), une autre partie à contour extérieur (6) en particulier conique ou à contour extérieur sensiblement cylindrique fait suite à cet étranglement, le méplat (11) et/ou la rétention (62) et/ou les fentes (24, 25) étant prévus dans cette partie dernière citée.
